# EUROPEAN PATENT SPECIFICATION

(11) **EP 0 915 141 B1**
(45) Date of publication and mention of the grant of the patent: **08.01.2003**
(21) Application number: 98308612.5
(22) Date of filing: 21.10.1998
(51) Int. Cl.: C09J 161/34

(54) **Phenol-melamine-urea-formaldehyde copolymer resin compositions, method of making and curing catalysts thereof**
Phenol-Melamin-Harnstoff-Formaldehyd-Copolymerharzmischungen, Verfahren zu ihrer Herstellung und Härtungskatalysatoren
Compositions de résine de copolymère à base de phénol-mélamine-urée-formaldéhyde, procédé de fabrication et catalyseurs pour le durcissement

(30) Priority: 07.11.1997 US 64755 P; 31.07.1998 CA 2244408
(43) Date of publication of application: 12.05.1999
(73) Proprietor: Arc Resins Corporation, Longueuil, Quebec JG4 1G6 (CA)
(72) Inventor: Paventi, Martino, Montreal, Quebec H1E 7C4 (CA)
(74) Representative: Bannerman, David Gardner

(56) References cited:
- DE-C- 3 027 203
- US-A- 4 285 848
- US-A- 4 831 089

## Description

### FIFLD OF THE INVENTION

The present invention relates to copolymers and resins for use as adhesives and binding agents in the production of wood-based products, particularly in the manufacturing of composite boards. The compositions of these copolymers and resins comprises a blend of phenol, formaldehyde, urea and melamine with catalysts to effect quick curing and hardening. The invention also relates to a stable blend of adhesive resin precursor which can be rapidly activated by addition of a suitable catalyst. Moreover, the invention relates to a method of making the novel adhesive resin.

### BACKGROUND OF THE INVENTION

The production of composite wood material such as plywood, partide board, wood fibre board etc, relies on the use of adhesive resins. Most of these resins are composites of two or more of the following: urea(U), formaldehyde (F), phenol (P) and melamine (M). The prior art is replete with examples of various melamine-formaldehyde (MF), urea-formaldehyde (UF), phenol-formaldehyde (PF) and phenol-melamine-urea-formaldehyde (PMUF). Other known resins are based on 4,4'-diphenylmethane diisocyanate (MDI).

Various drawbacks are associated with each known resin. For example, for most UF and MUF resins, of main concern is the unwanted release of formaldehyde into the environment once the composite board is constructed. MUF resins are somewhat better on this point since the melamine component scavenges free formaldehyde. Increasing the U/F ratio is advantageous for reducing formaldehyde emission but leads to the drawbacks of higher viscosity, lower water resistance, lower strength and slower curing rate.

MDI resins are commonly used in industry but suffer from the drawback of undesirable mat sticking to the caul plates or platens used to compress and bind wood particles into shaped boards. This drawback has led MDI producers to sell release agents increasing the overall cost of the MDI resin system.

MF resins have the drawback of high cost and low water miscibility. The prior art has suggested the production of PMUF resins with phenol present in a proportion of less than 10%wt. Such products have found application as cement additives rather than composite wood adhesives. USP 4,458,049 thus teaches the preparation of aqueous solutions of condensates of PMUF resins comprising sulfite additives. The addition of sulfite apparently results in decreasing the release of formaldehyde after processing and curing.

USP 4,382,847 teaches compositions of bonded products of cellulose or cellulose derivatives using as an adhesive the condensation resin between formaldehyde and urea, melamine or phenol without teaching any component compositions. One important drawback of this particular resin is its requirement for irradiation to improve cross-linking and reduce uncured areas of adhesive resin.

In USP 4,831,089, 4,857,609 and 4,954,581 Flodman et al. also teach a method of producing resins comprising P, M, U and F. This method requires the preparation of a pre-condensate of U/F to which the cross-linking agent in the form of the co-condensate P/U resin is added under acidic (pH 4-6) conditions. The reaction is stopped by alkalinization, thereby forming the resin to which additional U is added. Melamine may be optionally added to the pre-condensate mixture. This method requires that two mixtures be prepared separately and then combined to form the resin, once combined more urea is added to scavenge for free F. This multi-step preparation is costly. Moreover, excess urea added to decrease formaldehyde emission, increases the viscosity, lowers water resistance, decreases the strength and decreases the curing rate of the resin. In addition, once the resin has hardened, formaldehyde emission continues.

in summary, the prior art has failed to suggest the production of PMUF resins with phenol present in a proportion higher than 10%wt. Similarly, the prior art fails to report resins having melamine ratios higher than 27%wt. None of the known prior art resins combine proportions of phenol nearing 10%wt or higher and at the same time proportions of melamine nearing 25wt% or higher. The following table outlines the resins compositions reported in the prior art.

| **PRIOR ART RESINS** | | | | | |
|---|---|---|---|---|---|
| **US Patent** | Example | % Formaldehyde (total F + UF) | **% Phenol** | **% Melamine** | % Urea (total U + UF) |
| **4,382,847** | | no experimental data available | | | |
| **4,458,049** | ex 1 | 25.71 | 4.99 | 18.50 | 20.98 |
| | ex 2 | 23.18 | 3.98 | 20.87 | 23.02 |
| | comparative example | 23.14 | 3.98 | 21.00 | 23.00 |
| | ex 3 | 25.20 | 4.45 | 15.60 | 28.00 |
| | ex 4 | 30.68 | 4.66 | 12.88 | 20.04 |
| | ex5 | 25.18 | 2.30 | 22.70 | 20.52 |
| **4,831,089** | ex 1 | 23.43 | 0.42 | 26.12 | 17.98 |
| | ex 2 | 24.59 | 2.28 | 11.28 | 31.52 |
| | ex 3 | 23.11 | 0.42 | 25.76 | 19.11 |
| | ex 4 | 23.76 | 0.55 | 21.13 | 23.55 |
| **4,857,609** | ex 1 | 25.17 | 1.05 | 1.26 | 44.55 |
| | ex 2 | no experimental data available | | | |
| | ex 3 | 24.32 | 1.01 | 1.22 | 46.42 |
| | ex 4 | 24.32 | 1.01 | 1.22 | 46.42 |
| **4,954,581** | ex 1 | 25.17 | 1.05 | 1.26 | 44.55 |
| | ex 2 | no experimental data available | | | |
| | ex 3 | 24.32 | 1.01 | 1.22 | 46.42 |
| | ex 4 | 24.32 | 1.01 | 1.22 | 46.42 |

Thus, there remains an important commercial need for adhesive resins that are clear, homogenous, miscible, of low viscosity and suitable for easy and even spraying or blending with wood composites. There is great commercial need for such a resin which would also remain stable until ready for use and which would cure evenly and quickly once a composite wood product is assembled. There is also a need to provide a method for making these resins that is easy, clean, efficient and cost effective. There is a further need to have resins that are consistent from batch to batch, cure quickly and evenly, and, meet the low formaldehyde emission standards. Overall, new resins must be commercially competitive, provide good storage stability, fast curing speeds, low required press temperatures and good strenght, flexiblity characteristics once cured.

The present invention seeks to meet these and other needs by providing a novel and unexpected PMUF resinous composition containing greater amounts of incorporated phenol (P) and melamine (M) than reported in the prior art and with advantageous properties of stability, miscibility with water, low viscosity, homogeneity, speed of curing and once cured toughness, water resistance and low formaldehyde emissions. Such advantageous properties being so far unknown in the prior art and of great commercial import.

Other objects and further scope of applicability of the present invention will become apparent from the detailed description given hereinafter.

### SUMMARY OF THE INVENTION

Surprinsingly, a novel PMUF resin blend has been discovered. The novel resin has many advantageous properties and is characterized in part by a high content of phenol (at least 10%wt of the resin) and a high content of melamine (at least 25wt% of the resin).

Thus, in accordance with the present invention there is provided: A thermosetting resinous adhesive composition comprising:
(a) a thermosetting resin composition comprising phenol, melamine, formaldehyde, and urea, said composition comprising at least 25 weight percent of melamine, preferably 25 to 35 and most preferably 27 to 32 weight percent, and at least about 10 weight percent of phenol, preferably 11 to 16 weight percent and between 5 and 10 percent by weight of urea;
(b) a curing catalyst;
(c) water added in an amount sufficient to impart a suitable viscosity.

Also provided is a stable copolymer resin precursor composition for use as a precursor to a thermosetting resinous adhesive composition, the precursor composition comprising phenol, melamine and formaldehyde, said composition consisting of at least 25 weight percent of melamine, preferably 25 to 35 and most preferably 27 to 32 weight percent, at least 10 weight percent of phenol, preferably 11 to 16 weight percent, and between 5 and 10 percent by weight of urea.

Also provided is a method for making the precursor and adhesive compositions of the invention.

### BRIEF DESCRIPTION OF THE DRAWINGS

- Fig. 1: is a graphical illustration of the hardening speed of the resins of Examples 1 and 2 described herein;
- Fig. 2: is a graphical illustration of the viscosity profiles of the PMUF resin of the present invention with 15 parts of the resin curing catalysts of Example 1 and 10 parts of a formaldelyde scavenger, namely urea;
- Fig. 3: is a graphical illustration of the viscosity profiles of the PMUF resin of the present invention as described in Example 1, at various temperatures;
- Fig. 4: is an Arrhenius plot of the PMUF resin of the present invention, showing the aging time and temperature required for the resin to reach a given viscosity;
- Fig. 5: is a graphical illustration of weight percent of phenol versus time for a PF Ratio of 2.2 for resins comprising various identified catalysts.

### DETAILED DESCRIPTION OF THE INVENTION

The present invention relates to a phenol-melamine-urea-formaldehyde (PMUF) copolymer resin composition. Advantageously, the novel resin can be prepared in a single container and will remain stable, dear, water miscible and of low viscosity until ready for use. More specifically, the resin of the present invention remain stable at room temperature for over 1 month. The resin also remain clear up to their gel point. Once ready for use, a curing catalyst is added to the resin composition to achieve rapid gelling and curing. The resulting cured resin exhibits valuable properties of strength, toughness, water resistance of low formaldehyde emissions.

Preferably, the resin of the present invention will contain 11 to 16 wt% of phenol and 25 to 35 wt% of melamine. Most preferably, the resin will contain 27 to 32 wt%.

Preferably, the resin will contain 5-10% by weight urea.
The phenolic content of the resin serves to render the copolymer (a) ionizable, (b) impart flexibility or toughness to the bond line (c) decrease the cost when compared to MF resins and (d) impart better water resistance to the finished product.

The term "phenol" can include not only pure phenol but also other phenol compounds such as methylol phenols, resorcinols, cresols, aminophenols, carboxylated phenols, xylenols, chlorophenols, bisphenols-A, α-naphtols, β-naphtols, and the like and mixtures thereof.

The melamine content is used for cross-linking. Increasing cross-linking with sufficient melamine content in the resin will enhance cross-linking and avoid board swelling and will increase the strength of the finished product.

The term "melamine" again can include not only pure melamine but also alkylated and other melamine-like compounds known in the art, such as for example, methylolated melamines, aminopyridines, aminopyrimidines triazines with one or two amino groups such as ammeline, and mixtures thereof.

The term "scavenger" refers to a compound, usually urea, which scavenges free formaldehyde present in the resin so as to lower formaldehyde emissions from the resin.

Surprisingly, it has been found that the novel resins can be made to rapidly gel and cure by the addition of a curing catalyst. Advantageously, the curing catalysts may be selected from mixtures of aqueous ethylene glycol and formic acid at preferably 85% concentration/volume and preferably in the following range of volumetric proportions per total volume of the composition: 20 to 40 parts water; 10 to 40 parts ethylene glycol, and 40 to 60 parts formic acid. Optionally, the curing catalysts may be selected from any suitable catalysts such as mixtures of citric acid, formic acid, water and maleic anhydride, preferably in the following range of volumetric proportions per total volume of the composition: 7 to 22 parts citric acid; 10 to 35 parts formic acid; 10 to 35 parts water; and 0 to 13 parts maleic anhydride.

Advantageously, the novel ready-to-use resins may consist of about 100 parts of the novel copolymer blend and 15 parts of the curing catalyst(s). In such circumstances, the examples described herein show an extremely rapid curing rate of 40-60 sec at 100°C.

The present invention unexpectedly shows that the produced composite boards meet all environmental standards of formaldehyde emissions including the E1 test as described hereinbelow in the Footnote below Table 1 under subsections (f) and (g).

It has been shown that the E1 test is easily met by blending a copolymer composition of PMUF as will be described in the accompanying examples with 10 parts urea (formaldehyde scavenger), at about 45% concentration, for 100 parts of this PMUF copolymer and 15 parts of curing catalyst and loaded onto wood particles (∼14% resin solids per 100 parts of dry wood weight) in boards of about 6.35 mm thickness.

Referring to Table 1 to 3 below, the copolymer blend of the present invention was blended and cured with an acid catalyst, preferably formic acid. Curing was effected by thermoset at 100°C within 60 seconds. Thus, cured particle boards were made at rates of more than 7m/min on a "Mende" line.

**Table 1.**

| Particleboard Data: 6.35 mm thick board. | | | | |
|---|---|---|---|---|
| Resin mix^{a} | Example 1 | | Example 1 + commercial scavenger | |
| Press cycle (s)^{b} | 30 | 40 | 30 | 40 |
| Resinated particles moisture content (%) | 8.6 | 8.6 | 9.4 | 9.4 |
| Density of board (kg/m³)^{c} | 635.9 | 696.8 | 660 | 679.2 |
| Internal bond (MPa)^{c} | 0.721 | 1.144 | 0.713 | 0.936 |
| Internal bond (MPa)^{c,}^{d} | 0.442 | 0.508 | 0.373 | 0.499 |
| Thickness swell (%)^{c,}^{e} | 13.4 | 15.3 | 14.1 | 14.7 |
| Desiccator Value (mg/l)^{f} | 1.28 | 1.54 | 0.59 | 0.49 |
| Correlated LSTC Value (ppm)^{g} | 0.36 | 0.43 | 0.17 | 0.14 |

| | | | | |
|---|---|---|---|---|
| ^{a}PMUF 100 parts + catalyst 15 parts. Loading of resin onto the particles was kept at 14 parts based on resin solids. For example the PMUF (Ex 1) which is 66.5 % solids, for every 100 g of dry particles, 24.2 g of the catalyzed resin were used. When the commercial scavenger (ARC 9313) was used the total mix load (resin + catalyst + scavenger) was 26.3 g for 100 g of dry wood particles. No wax was used. Board nominal dimensions were: 45.7 cm × 45.7 cm × 0.635 cm. | | | | |
| ^{b}Top platen temperature 140°C. Bottom platen temperature 150°C: to compensate for temperature differential with the additional caul plate. Pressing was done by closing and opening quickly. Cycle time is that for 0 daylight to 0 daylight. | | | | |
| ^{c}These are the results for a second board pressed under the same conditions. | | | | |
| ^{d}After boiling for 2 hours and drying. | | | | |
| ^{e}After 24 hours soak at room temperature. | | | | |
| ^{f}ASTM D5582-94 Determining formaldehyde levels from wood products using desiccator. Test performed by Forintek Canada Corp. | | | | |
| ^{g}Correlated Value was determined by using the correlation curve established between the Large Scale Test Chamber and the Two-Hour Desiccator Test. Test performed by Forintek Canada Corp. | | | | |

**Table 2.**

| Particleboard Data: 6.35 mm thick board, no scavenger or wax. | | | | | | | | | |
|---|---|---|---|---|---|---|---|---|---|
| Resin mix^{a} | Example 1 | | | Example 2 | | | Example 3 | | |
| Press cycle (s)^{b} | 60 | 45 | 30 | 60 | 45 | 30 | 60 | 45 | 30 |
| Resinated particles moisture content (%) | 9.7 | 9.7 | 9.7 | 9.4 | 9.4 | 9.4 | 8.8 | 8.8 | 8.8 |
| Density of board (Kg/m³) | 695.2 | 696.8 | 671.2 | 727.2 | 740 | 733.6 | 788.1 | 765.7 | 714.4 |
| Internal bond (MPa) | 1.202 | 1.221 | 1.084 | 1.46 | 1.371 | 1.151 | 1.626 | 1.498 | 1.369 |
| Internal bond (MPa)^{c} | 0.434 | 0.426 | 0.497 | 0.652 | 0.547 | 0.556 | 0.629 | 0.813 | 0.788 |
| Thickness swell (%)^{d} | 17.2 | 17.4 | 16.8 | 18.3 | 16.9 | 18.8 | 16.7 | 16 | 15.4 |

| | | | | | | | | | |
|---|---|---|---|---|---|---|---|---|---|
| ^{a}PMUF 100 parts + catalyst 15 parts. Loading of resin onto the particles was kept at 14 parts based on resin solids. For example for the PMUF (Ex 3) which is 66.21 % solids, for every 100 g of dry particles, 24.25 g of the catalyzed resin were used. | | | | | | | | | |
| ^{b}Same as footnote b in Table 1. | | | | | | | | | |
| ^{c}After boiling for 4 hours and drying. | | | | | | | | | |
| ^{d}After a 24-h soak at room temperature. | | | | | | | | | |

**Table 3.**

| Particleboard Data: 6.35 mm thick board, with commercial scavenger and no wax. | | | | | | |
|---|---|---|---|---|---|---|
| Resin mix^{a} | Example 1 | | | Example 2 | | |
| Press cycle (s)^{b} | 50 | 40 | 30 | 50 | 40 | 30 |
| Resinated particles moisture content (%) | 10.1 | 10.1 | 10.1 | 9.9 | 9.9 | 9.9 |
| Density of board (Kg/m³) | 698.4 | 690.4 | 663.2 | 696.8 | 682.4 | 661.6 |
| Internal bond (MPa) | 0.967 | 0.887 | 0.521 | 1.296 | 1.193 | 1.034 |
| Internal bond (MPa)^{c} | 0.24 | 0.206 | 0.197 | 0.547 | 0.712 | 0.587 |
| Tickness swell (%)^{d} | 13.9 | 13.9 | 15.2 | 14.6 | 13.4 | 13.3 |

| | | | | | | |
|---|---|---|---|---|---|---|
| ^{a}PMUF 100 parts + 10 parts of commerclal scavenger + acid catalyst 15 parts. Loading of resin onto the particles was kept at 14 parts based on resin solids. For example for the PMUF (Ex 1) which is 63.69 % solids, for every 100 g of dry particles, 26.94 g of the catalyzed resin/scavenger mix were used. | | | | | | |
| ^{b}Same as footnote b in Table 1. | | | | | | |
| ^{c}After boiling for 4 hours and drying. | | | | | | |
| ^{d}After a 24-h soak at room temperature. | | | | | | |

The novel resin (100 parts) and an acid curing catalyst (15 parts), namely formic acid (85%)/water/maleic anhydride/citric acid in the ratio 50:50:19:31, applied in the core at a 2.5 % loading based on resin solids, produces oriented strand boards which compare or are better depending on property measured than when 4,4'-diphenylmethane diisocyanate (MDI) is used in the core as the adhesive. This is shown in Table 4 to 6 on the next page.

The resin of the present invention is thus capable of advantageously replacing existing MDI systems currently in use. At 7% loading, based on solid content of the resin, onto medium-density wood fibres (MDF), this resin catalysed with 15 parts of formic acid solution, produces MDF boards under conditions of steam pressing. This is shown in Table 7 below. The catalysed resin mixed with 10 parts of wood flour and spread at room temperature on pine veneers and placed under vice pressure gives a good bond (>90% wood failure).

**Table 7.**

| MDF Data^{a} | | | | | | | | |
|---|---|---|---|---|---|---|---|---|
| Board thickness | 19.05 mm | | | | 15.86 mm | | | |
| Resin mix | PMUF+ 10 % cat (Ex 1) | | | | PMUF+ 10 % cat (Ex 1) | | | |
| Press cycle (min)^{b} | 7 | 7 | | | 5.5 | | | |
| Resin-mix load on particles (%) | 10 | 7.5 | | | 5 | | | |
| Resinated particles moisture content (%) | 12.6 | 8.9 | | | 7.9 | | | |
| Density of board (kg/m³) | 767.5 | 771.4 | | | 818.4 | | | |
| Thickness attained (mm) | 17.83 | 18.19 | | | 15.72 | | | |
| Internal bond (MPa) | 0.868 | 0.771 | | | 0.646 | | | |
| Modulus of rupture (MPa) | 39.07 | 28.16 | | | 22.94 | | | |
| Modulus of elasticity (MPa) | 3461 | 2825 | | | 2872 | | | |
| Thickness swell (%)^{c} | 3.8 | 6.4 | | | 10 | | | |
| Absorption (%)^{c} | 7.6 | 9.4 | | | 12.1 | | | |

| | | | | | | | | |
|---|---|---|---|---|---|---|---|---|
| ^{a}Work performed at Forintek Canada Corp. | | | | | | | | |
| ^{b}Platen temperature 110°C. Slack wax applied at 1% of dry material. | | | | | | | | |
| ^{c}After a 24-h soak at room temperature. | | | | | | | | |

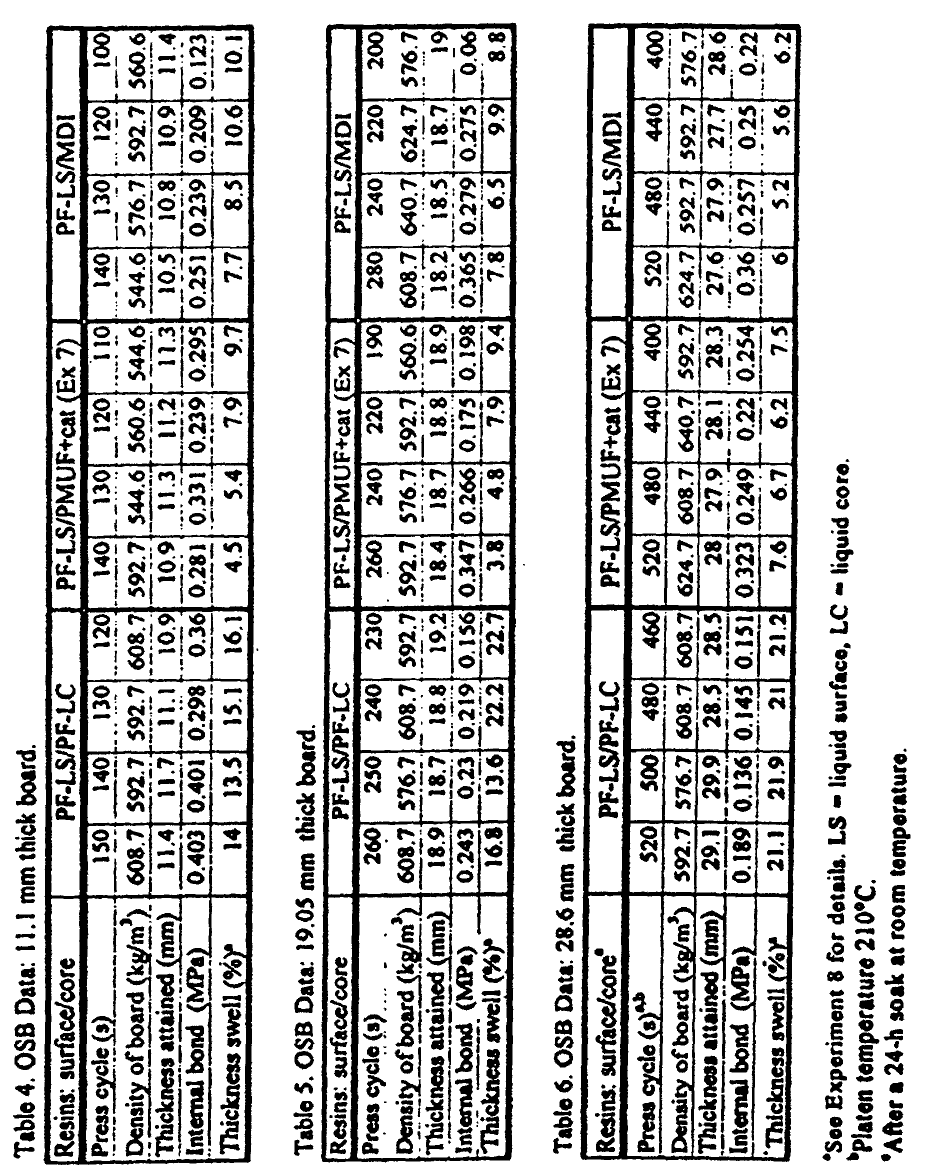

In accordance with the present invention, the resin-curing catalyst blend has a pot life of 30-90 minutes which is entirely suitable for most industrial applications. After 30-90 minutes, the resin-curing catalyst blend will begin to gel and turn murky white. However, notwithstanding its curing speed when catalysed, the virgin resin blend is stable at 25°C for over 20 days.

Of interest, the fact that the curing-catalysed resin of the present invention cures quickly has not led to deleterious pre-curing effects. For "Mende" line applications with rollers at 180°C and rolling time of about 30 seconds, no detectable pre-curing was observed.

When making the initial virgin resin blend, a resin forming catalyst, preferably triethanolamine (TEA) at 85% concentration or other suitable non metallic base, may be used used to promote the condensation reaction wherein phenol and formadehyde condensate to form methylol phenol thereby imparting good flexibility and strength to the resulting adhesive once urea, water and the curing catalyst are added to the resin blend.

Also when making the virgin intial resin blend, the pH of the blend may be adjusted upwards by adding a base, such as NaOH or other suitable alkali metal hydroxide. NaOH or other alkali metal hydroxide may also be used as a catalyst to promote the ionization of the PMUF resin.

The present invention is illustrated in further detail by the following non-limiting examples. Each example providing resins and particle boards having the previously announced characteristics.

### Characterization Methods:

Different formulations have been prepared within the range of 63-66% non-volatiles or % solids (found by weighing 2 g of resin in an aluminum dish and heating at 125°C in a convection oven for 2 hours). These resins have gel times 700-900 seconds at 121°C (Sunshine gel meter). Viscosities are reported at 25°C and measured with Brookfield LVF spindle #2 at 60 cycles per minute. Gel times at 121°C were measured with a Sunshine gel meter.

### Example 1: preparation of a PMF blend, resin precursor

A mixture of 339.6 g of phenol, 620.7 g of formaldehyde (52%) and 65.1 g of triethanolamine (TEA) (85%) were heated to 90-94°C to viscosity ∼ 50 mPa•s. The temperature was lowered to 70°C. Then, in succession, 12.1 g of 50% NaOH (pH adjustment to 8.5 to 9.2, preferably 8.7, 910.5 g of melamine and 630.0 g of formaldehyde (52%) were added. The mixture is heated to up to 85°C till clear and cooled to 80-82°C and stirred until achieving a viscosity of ∼450 mPa•s. The temperature was then lowered to 70°C and held at this temperature for a viscosity of 950-1000 mPa•s. At this point 198.3 g of urea were dissolved. The reaction mixture was cooled and 77.2 g of 50% NaOH were added followed by 146.6 g of water.

This resin has solid residue of 63.4%. A miscibility with water of 1:0.36, a viscosity of 370 mPa•s, pH of 10.7, specific gravity 1.2855, a gel time (at 121°C) of 960 s, free formaldehyde 1.14%. A mixture of 100 parts of this resin with 15 parts of the acid curing catalyst, gels at 100°C within 58 s (average of 3 trials) and remains clear for a period of ∼50 minutes.

The acid curing catalyst above was a solution of water/ethylene glycol/formic acid (85%) in the ratios of 3:2:5, respectively.

The catalysed resin of example 1, when mixed with wood or hard wood flour (10 parts resin to 1 part flour) may be advantageously used a cold set spread. The resulting bond in pine veneers is sufficiently strong to give better than 90% wood failure in the knife test.

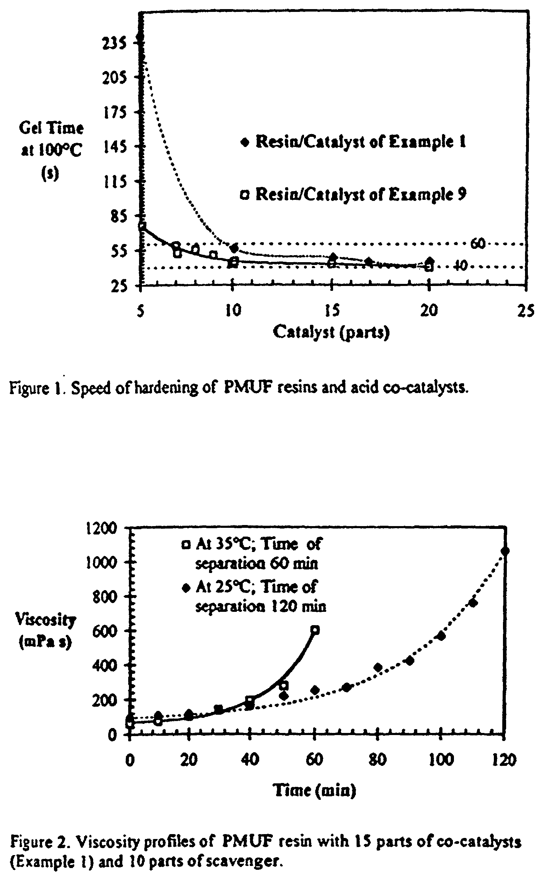

Turning now to Fig. 1 there is shown the speed of hardening of the PMUF resins of the present invention embodied in Examples 1 and 9. It is readily apparent that the speed of hardening is in the advantageous range of 40-60 seconds at 100°C

In Fig. 2 there is shown the viscosity profiles of the PMUF resins of the present invention embodied in Example 1 and comprising 10 parts of a urea scavenger for every 100 parts of PMF blend. Advantageously, it can be seen that the resin-catalyst blend of the present invention produces a blend with an initial period of low viscosity of 125-150 mPa•s

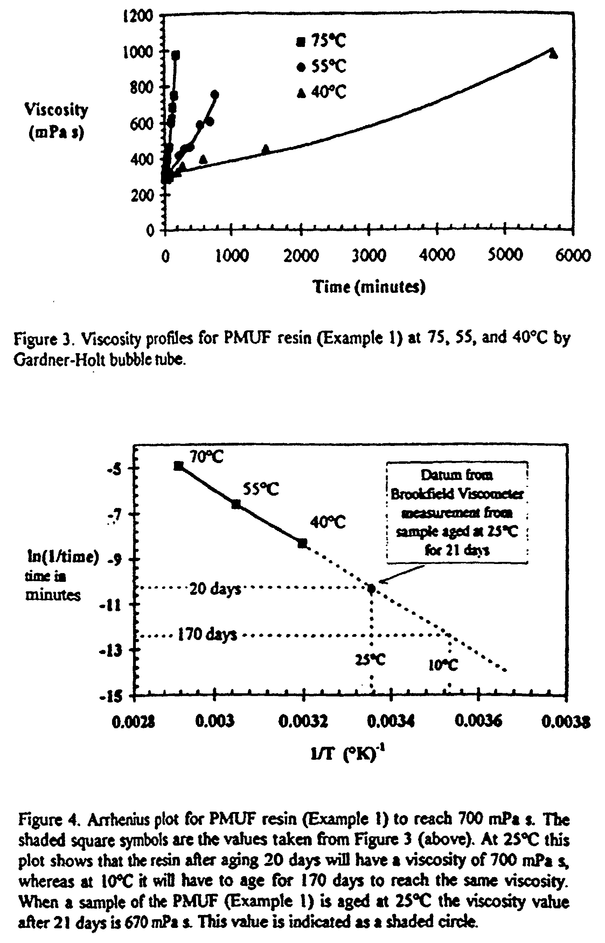

In Fig. 3 there is shown the viscosity profiles of the same resin embodied in Example 1 at various temperatures, namely, 40, 55 and 75°C.

The effect of accelerated aging of the resin of Example 1 is shown in the Arrhenius equation plot of Fig. 4.

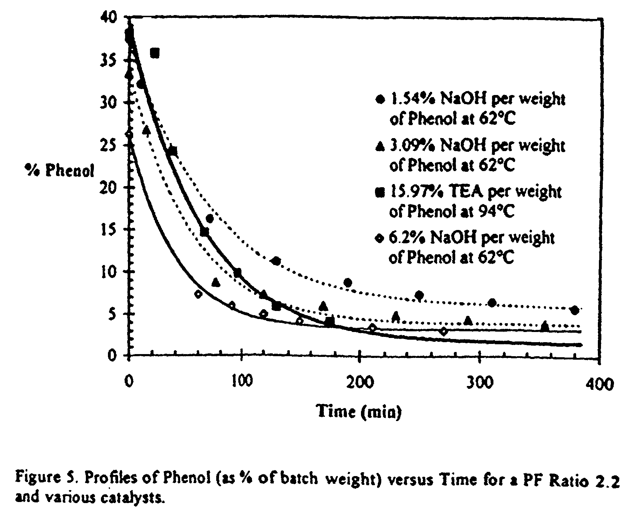

In Fig. 5 there is shown (using various resin forming catalysts, namely NaOH and TEA at various concentrations) the weight percentage of phenol in the resin of the present invention wherein the P/F ratio was, for the purpose of example, set at 2.2.

### Examples 2 and 3

Procedure is similar to example 1 but with amounts expressed in grams given below.

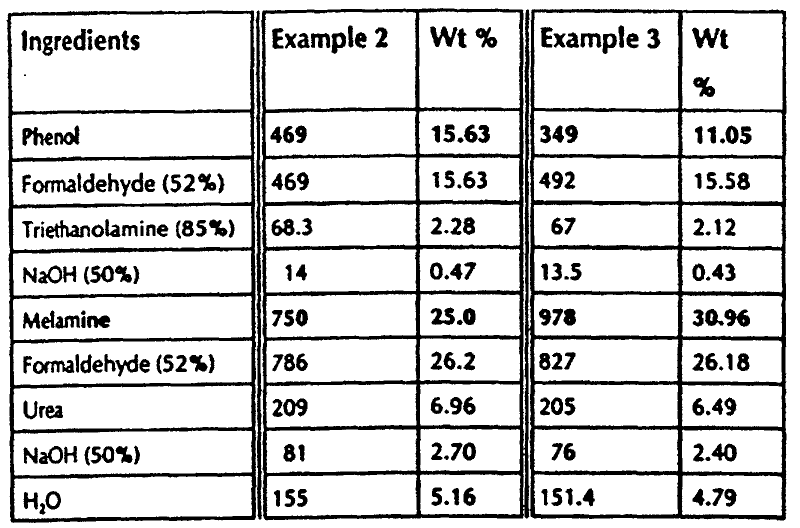

### Example 2

This resin has solid residue of 63.69%. A miscibility with water of 1:0.35, a viscosity of 383 mPa•s, pH of 10.75, specific gravity 1.2742, a gel time (at 121 °C) of 874 s, free formaldehyde 1.29%. A mixture of 100 parts of this resin with 15 parts of the acid catalyst (example 1), gels at 100°C within 51-54 s and remains clear for a period of ∼60 minutes.

### Example 3

This resin has solid residue of 66.21 %. A miscibility with water of 1 :0.82, a viscosity of 362.5 mPa•s, pH of 11.14, specific gravity 1.2968, a gel time (at 121°C) of 861 s, free formaldehyde 1.08%. A mixture of 100 parts of this resin with 15 parts of the acid catalyst (example 1), gels at 100°C within 48-49 s and remains clear for a period of ∼ 45 minutes.

### Example 4

The mixture of 409.9 g of m-cresol, 584.3 g of formaldehyde (52%) and 57.1 g of triethanolamine (85%) were heated to 90-94°C to viscosity ∼50 mPa•s. The temperature was lowered to 70°C. Then, in succession, 6.4 g of 50% NaOH, 951.9 g of melamine and 630.0 g of formaldehyde (52%) were added. The mixture is heated to up to 95°C till dear and cooled to 80-82°C. Then 14.3 g of 50% NaOH were added. The temperature was then lowered to 70°C and held at this temperature for a viscosity of ∼1525 mPa•s. At this point 213.6 g of urea were dissolved. The reaction mixture was cooled and 75.9 g of 50% NaOH were added followed by 157.7 g of water.

This resin has solid residue of 63.37%. A viscosity of 550 mPa•s, water miscibility 1:0.2, pH of 11.45, specific gravity 1.2827, a gel time (at 121°C) of 442 s, free formaldehyde 1.55%. A mixture of 100 parts of this resin with 15 parts of the acid catalyst (example 1), gels at 100°C within 44-45 s and remains dear for a period of ∼60 minutes.

### Example 5

The mixture of 346 g of phenol, 467 g of formaldehyde (52%) and 10.7 g of 50% NaOH were heated to 62-64°C to viscosity ∼50 mPa•s. The temperature was increased to 70°C. Then, in succession 910 g of melamine and 783 g of formaldehyde (52%) were added. The mixture is heated to up to 87°C till clear. Cooled to 70°C and held to a viscosity ∼975 mPa•s. Then, 199 g of urea were dissolved. The reaction mixture was cooled and 77 g of 50% NaOH were added followed by 147 g of water.

This resin has solid residue of 65.39%. A miscibility with water of 1:0.48, a viscosity of 340 mPa•s, pH of 11.3, specific gravity 1.2978, a gel time (at 121°C) of 855 s, free formaldehyde 1.02%.

### Example 6: Percent decrease of phenol with time with different catalysts:

To determine the decrease of phenol with time four different experiments were carried out by reacting phenol and formaldehyde (52%) with different amount of catalysts at temperature of 62°C for NaOH catalysis and at 94°C for catalysis by TEA. At various intervals an aliquot was taken, cooled to 0°C to quench the reaction, and the amount of unreacted phenol determined by GC (FID detector).

For the GC experiments an internal standard was used (either ethylene glycol or m-cresol) and a calibration curve was made before the individual samples were analyzed. The oven temperature was kept at 175°C, injector and detector temperature at 190°C. The attenuation on the GC was 256 and range of sensitivity at 10⁻¹². An integrator was used to obtain the peak areas and these, in turn, were used to make calibration curves and calculate the final % phenol in the reaction batch. The final results are plotted in Figure 5. The outcome of these experiments serve to show that triethanolamine gives the lowest amount of residual phenol. Whereas NaOH catalyzed reaction proceeds at a faster rate, but the final amount of free phenol is higher probably because the pK's (ionization is 100% with NaOH curing catalyst) of the various methylol phenols formed are lower than phenol contributing to a faster advancement (to higher molecular weights) and faster consumption of formaldehyde. The mechanism of catalysis with trietanolamine is apparently one that does not contribute to complete ionization of phenol with the possibility of some hindrance of the ion-air formation. This effect imparts more selectivity on the smaller molecules such as free phenol so that it can react in preference. It is well-documented that coordination with metal ions greatly affects the direction of the reaction between phenol and formaldehyde.

### Example 7

The mixture of 563 g of phenol, 2073 g of formaldehyde (52%) and 108 g of triethanolamine (85%) were heated to 90-94°C to viscosity ∼ 50 mPa•s. The temperature was lowered to 70°C. Then, in succession, 20 g of 50% NaOH and 1510 g of melamine were added. The mixture is heated to up to 85°C till dear and cooled to 80-82° and stirred until a viscosity of -450 mPa•s. The temperature was then lowered to 70°C and held at this temperature for a viscosity of 950-1000 mPa•s. At this point 329 g of urea were dissolved. The reaction mixture was cooled and 128 g of 50% NaOH were added followed by 169 g of water.

This resin has solid residue of 65.29%. A viscosity of 315 mPa•s, water miscibility 1:0.2, pH of 10.52, specific gravity 1.2971, a gel time (at 121°C) of 874 s, free formaldehyde 1.09%. A mixture of 100 parts of this resin with 15 parts of the acid catalyst, gels at 100°C within 54-58 s and remains dear for a period of ∼ 60 minutes.

The catalyst above is made up of citric acid, formic acid (85%), water and maleic anhydride in a ratio 9.3:15:15:5.7.

### Example 8: Conditions for OSB application:

The resin and catalyst system of example 7 were used to compare performances in oriented strandboard (OSB) with another commercial PF core resin and methylenebis (4-phenylisocyanate) (MDI) and a commercial surface resin. The dosages are circa 2.5% (of resin solids) to 100 g of dry wood. The liquid surface resin (PF-LS) solid content is 60% and 150 mPa•s with low tack. The commercial liquid core resin (PF-LC) is 48% solids and 200 mPa•s viscosity and requires 4% of promoter for best performance. MDI is considered as 100% solids and requires a minimum of 5% moisture in the wood. All parameters were kept as constant as possible among the different experiments. The results are given in Table 2. The main drawback to the workability of the PMUF example 7 is its high tackiness otherwise it performs as well as MDI in speed and water properties for the 11.1 and 19.05 mm thick boards. MDI appears to be marginally better in 28.6 mm thick boards than the PMUF.

### Example 9: Conditions for cold-set application:

To the resin (example 1) and catalyst (ethylene glycol/formic acid 2:3) mix was added 10 parts of hardwood flour 140 mesh. then spread on three layers of pine veneers ∼ 5 x 10 cm with an applied pressure of 1 kg weight at room temperature. After 24 hours the knife test showed > 90% wood failure.

In summary, the PMUF components of the resin of the present invention provided in examples 1, 2, 3, 4 and 7 are as follows:

| Example | % Formaldehyde (total F + UF) | % Phenol % Melamine | | % Urea (total U + UF) |
|---|---|---|---|---|
| 1 | 21.67 | 11.32 | 30.35 | 6.61 |
| 2 | 21.75 | 15.63 | 25.00 | 6.97 |
| 3 | 21.71 | 11.05 | 30.96 | 6.49 |
| 4 | 20.36 | 13.22 | 30.69 | 6.89 |
| 7 | 22.00 | 11.49 | 30.82 | 6.71 |

Thus, the present invention provides a novel resin blend formulation having equal or better properties than known resins. In addition, an unexpectedly simple method of preparation was disclosed.

## Claims

1. A thermosetting resinous adhesive composition comprising:
(a) a thermosetting resin composition comprising phenol, melamine, formaldehyde, and urea, said composition comprising at least 25 percent by weight of a melamine compound and at least 10 percent by weight of a phenol compound, and between 5 and 10 percent by weight of urea;
(b) a curing catalyst;
(c) water added in an amount sufficient to impart a suitable viscosity.

2. The thermosetting resinous adhesive composition of claim 1 wherein said resin composition comprises 25 to 32 percent by weight of a melamine compound and 11 to 16 percent by weight of a phenol compound.

3. The thermosetting resinous adhesive composition of claim 2 wherein said resin composition comprises 27 to 32 percent by weight of a melamine compound and 11 to 16 percent by weight of a phenol compound.

4. The thermosetting resinous adhesive composition of claim, 3 wherein said resin composition further comprises a resin forming catalyst selected from triethanolamine, alkali metal hydroxide(s) and mixtures thereof.

5. The thermosetting resinous adhesive composition of claim 4 wherein said alkali metal hydroxide is NaOH.

6. The thermosetting resinous adhesive composition of claim 1 wherein said curing catalyst comprises aqueous ethylene glycol and formic acid.

7. The thermosetting resinous adhesive composition of claim 6 wherein said curing catalyst comprises comprises aqueous ethylene glycol and formic acid at 85% concentration/volume in the following ranges of volumetric proportions per total volume of the composition:
20 to 40 pans water
10 to 40 parts ethylene glycol, and
40 to 60 parts formic acid.

8. The thermosetting resinous adhesive composition of claim 1 wherein said curing catalyst comprises citric acid, formic acid, water and anhydride in the following ranges of volumetric proportions per total volume of the composition;
7 to 22 parts citric acid
10 to 35 parts formic acid
10 to 35 parts water, and
0 to 13 parts maleic anhydride.

9. A stable copolymer resin precursor composition for use as a precursor to a thermosetting resinous adhesive composition, said precursor composition comprising phenol, melamine and formaldehyde, said composition consisting of at least 25 percent by weight of a melamine compound, at least 10 percent by weight of a phenol compound and between 5 and 10 percent by weight of urea.

10. The precursor composition of claim 9 further comprising resin forming catalysts selected from triethanolamine, alkali metal hydroxide(s), and mixtures thereof.

11. Method for the preparation of thermosetting resinous adhesive compositions as defined in claim 1, said method comprising blending phenol, formaldehyde, melamine, urea, sodium hydroxide and water, said method being **characterized in that** said adhesive compositions, prior to adding sodium hydroxide and water, comprise at least 25 percent by weight of a melamine compound, at least 10 percent by weight of a phenol compound and between 5 and 10 percent by weight urea.

12. An engineered wood product containing the thermosetting resinous adhesive of claim 1.

13. The engineered wood product of claim 12 wherein said product is an oriented strand board.

14. The engineered wood product of claim 12 wherein said product is fibre board.

15. The engineered wood product of claim 12 wherein said product is plywood.

16. The engineered wood product of claim 12 wherein said product is polylaminated veneer.

17. The engineered wood product of claim 12 wherein said product comprises recycled waste wood material.

18. The engineered wood product of claim 13 wherein said product comprises recycled waste wood material.

## Patentansprüche

1. Wärmehärtbare harzartige Klebstoffzusammensetzung, umfassend:
(a) eine wärmehärtbare Harzzusammensetzung, umfassend Phenol, Melamin, Formaldehyd und Harnstoff, wobei die Zusammensetzung mindestens 25 Gew.-% einer Melaminverbindung und mindestens 10 Gew.-% einer Phenolverbindung und zwischen 5 und 10 Gew.-% Harnstoff umfasst;
(b) einen Härtungskatalysator;
(c) Wasser, zugesetzt in einer ausreichenden Menge, um eine geeignete Viskosität zu verleihen.

2. Wärmehärtbare harzartige Klebstoffzusammensetzung nach Anspruch 1, wobei die Harzzusammensetzung 25 bis 32 Gew.-% einer Melaminverbindung und 11 bis 16 Gew.-% einer Phenolverbindung umfasst.

3. Wärmehärtbare harzartige Klebstoffzusammensetzung nach Anspruch 2, wobei die Harzzusammensetzung 27 bis 32 Gew.-% einer Melaminverbindung und 11 bis 16 Gew.-% einer Phenolverbindung umfasst.

4. Wärmehärtbare harzartige Klebstoffzusammensetzung nach Anspruch 3, wobei die Harzzusammensetzung ferner einen harzbildenden Katalysator umfasst, gewählt aus Triethanolamin, Alkalimetallhydroxid(en) und Mischungen hiervon.

5. Wärmehärtbare harzartige Klebstoffzusammensetzung nach Anspruch 4, wobei das Alkalimetallhydroxid NaOH ist.

6. Wärmehärtbare harzartige Klebstoffzusammensetzung nach Anspruch 1, wobei der Härtungskatalysator wäßriges Ethylenglykol und Ameisensäure umfasst.

7. Wärmehärtbare harzartige Klebstoffzusammensetzung nach Anspruch 6, wobei der Härtungskatalysator wäßriges Ethylenglykol und Ameisensäure bei 85 % Konzentration/Volumen in den folgenden Bereichen der volumetrischen Anteile pro Gesamtvolumen der Zusammensetzung umfasst:
20 bis 40 Teile Wasser,
10 bis 40 Teile Ethylenglykol, und
40 bis 60 Teile Ameisensäure.

8. Wärmehärtbare harzartige Klebstoffzusammensetzung nach Anspruch 1, wobei der Härtungskatalysator Zitronensäure, Ameisensäure, Wasser und Anhydrid in den folgenden Bereichen der volumetrischen Anteile pro Gesamtvolumen der Zusammensetzung umfasst:
7 bis 22 Teile Zitronensäure,
10 bis 35 Teile Ameisensäure,
10 bis 35 Teile Wasser, und
0 bis 13 Teile Maleinsäureanhydrid.

9. Stabile Copolymer-Harzvorläuferzusammensetzung zur Verwendung als Vorläufer einer wärmehärtbaren harzartigen Klebstoffzusammensetzung, wobei die Vorläuferzusammensetzung Phenol, Melamin und Formaldehyd umfasst, wobei die Zusammensetzung aus mindestens 25 Gew.-% einer Melaminverbindung, mindestens 10 Gew.-% einer Phenolverbindung und zwischen 5 und 10 Gew.-% Harnstoff besteht.

10. Vorläuferzusammensetzung von Anspruch 9, ferner umfassend harzbildende Katalysatoren, gewählt aus Triethanolamin, Alkalimetallhydroxid(en) und Mischungen hiervon.

11. Verfahren zur Herstellung von wärmehärtbaren harzartigen Klebstoffzusammensetzungen nach Anspruch 1, wobei das Verfahren das Vermischen von Phenol, Formaldehyd, Melamin, Harnstoff, Natriumhydroxid und Wasser umfasst, wobei das Verfahren **dadurch gekennzeichnet ist, dass** die Klebstoffzusammensetzungen vor dem Zusetzen von Natriumhydroxid und Wasser mindestens 25 Gew.-% einer Melaminverbindung, mindestens 10 Gew.-% einer Phenolverbindung und zwischen 5 und 10 Gew.-% Harnstoff umfassen.

12. Technisch verarbeitetes Holzprodukt, enthaltend den wärmehärtbaren harzartigen Klebstoff nach Anspruch 1.

13. Technisch verarbeitetes Holzprodukt nach Anspruch 12, wobei das Produkt eine Platte aus orientierten Langspänen (OSB-Platte) ist.

14. Technisch verarbeitetes Holzprodukt nach Anspruch 12, wobei das Produkt eine Faserplatte ist.

15. Technisch verarbeitetes Holzprodukt nach Anspruch 12, wobei das Produkt Schichtholz ist.

16. Technisch verarbeitetes Holzprodukt nach Anspruch 12, wobei das Produkt ein polylaminiertes Furnier ist.

17. Technisch verarbeitetes Holzprodukt nach Anspruch 12, wobei das Produkt recyceltes Abfallholzmaterial umfasst.

18. Technisch verarbeitetes Holzprodukt von Anspruch 13, wobei das Produkt recyceltes Abfallholzmaterial umfasst.

## Revendications

1. Composition de colle à résine thermodurcissable comprenant :
(a) une composition de résine thermodurcissable comprenant du phénol, de la mélamine, du formaldéhyde et de l'urée, ladite composition comprenant au moins 25 pour cents en poids d'un composé de mélamine, au moins 10 pour cents en poids d'un composé de phénol, et entre 5 et 10 pour cents en poids d'urée ;
(b) un catalyseur de vulcanisation ;
(c) de l'eau ajoutée selon une quantité suffisante pour obtenir une viscosité adaptée.

2. Composition de colle à résine thermodurcissable selon la revendication 1, dans laquelle ladite composition de résine comprend de 25 à 32 pour cents en poids d'un composé de mélamine et de 11 à 16 pour cents en poids d'un composé de phénol.

3. Composition de colle à résine thermodurcissable selon la revendication 2, dans laquelle ladite composition de résine comprend de 27 à 32 pour cents en poids d'un composé de mélamine et de 11 à 16 pour cents en poids d'un composé de phénol.

4. Composition de colle à résine thermodurcissable selon la revendication 3, dans laquelle ladite composition de résine comprend en outre un catalyseur de formation de résine choisi parmi la triéthanolamine, l'(es) hydroxyde(s) de métaux alcalins et des mélanges de ceux-ci.

5. Composition de colle à résine thermodurcissable selon la revendication 4, dans laquelle ledit hydroxyde de métal alcalin est du NaOH.

6. Composition de colle à résine thermodurcissable selon la revendication 1, dans laquelle ledit catalyseur de vulcanisation comprend de l'éthylèneglycol aqueux et de l'acide formique.

7. Composition de colle à résine thermodurcissable selon la revendication 6, dans laquelle ledit catalyseur de vulcanisation comprend de l'éthylèneglycol aqueux et de l'acide formique à 85% en concentration/volume dans les gammes suivantes de proportions volumétriques par volume total de la composition :
20 à 40 parties d'eau
10 à 40 parties d'éthylèneglycol ; et
40 à 60 parties d'acide formique.

8. Composition de colle à résine thermodurcissable selon la revendication 1, dans laquelle ledit catalyseur de vulcanisation comprend de l'acide citrique, de l'acide formique, de l'eau et de l'anhydride dans les gammes suivantes de proportions volumétriques par volume total de la composition :
7 à 22 parties d'acide citrique ;
10 à 35 parties d'acide formique ;
10 à 35 parties d'eau ; et
0 à 13 parties d'anhydride maléique.

9. Composition de précurseur de résine copolymère stable pour être utilisée comme précurseur pour une composition de colle à résine thermodurcissable, ladite composition de précurseur comprenant du phénol, de la mélamine et du formaldéhyde, ladite composition consistant en au moins 25 pour cents en poids d'un composé de mélamine, au moins 10 pour cents en poids d'un composé de phénol, et entre 5 et 10 pour cents en poids d'urée.

10. Composition de précurseur selon la revendication 9, dans laquelle ladite composition de résine comprend en outre des catalyseurs de formation de résine choisis parmi la triéthanolamine, l'(es) hydroxyde(s) de métaux alcalins et des mélanges de ceux-ci.

11. Procédé de préparation de compositions de colle à résine thermodurcissable telles que définies par la revendication 1, ledit procédé comprenant le mélange de phénol, de formaldéhyde, de mélamine, d'urée, d'hydroxyde de sodium et d'eau, ledit procédé étant **caractérisé en ce que** les compositions de colle, avant d'ajouter l'hydroxyde et l'eau, comprennent au moins 25 pour cents en poids d'un composé de mélamine, au moins 10 pour cents en poids d'un composé de phénol et entre 5 et 10 pour cents en poids d'urée.

12. Produit élaboré à base de bois contenant la colle à résine thermodurcissable de la revendication 1.

13. Produit élaboré à base de bois selon la revendication 12, dans lequel ledit produit est un panneau à brin orienté.

14. Produit élaboré à base de bois selon la revendication 12, dans lequel ledit produit est du panneau en fibres.

15. Produit élaboré à base de bois selon la revendication 12, dans lequel ledit produit est du contreplaqué.

16. Produit élaboré à base de bois selon la revendication 12, dans lequel ledit produit est du plaquage polylaminé.

17. Produit élaboré à base de bois selon la revendication 12, dans lequel ledit produit comprend des déchets de bois recyclés.

18. Produit élaboré à base de bois selon la revendication 13, dans lequel ledit produit comprend des déchets de bois recyclés.
